# EUROPEAN PATENT APPLICATION

(11) **EP 0 607 456 A1**
(43) Date of publication of application: **27.07.1994**
(21) Application number: 93916223.6
(22) Date of filing: 26.07.1993
(51) Int. Cl.: B23K 26/06, B23K 26/08

(54) **LASER ROBOT SYSTEM FOR INDUSTRIAL USE**

(30) Priority: 31.07.1992 JP 205442/92
(71) Applicant: FANUC LTD., Minamitsuru-gun, Yamanashi 401-05 (JP)
(72) Inventor: WATANABE, Atsushi Fanuc Mansion Harimomi 7-207, Minamitsuru-gun Yamanashi 401-05 (JP); NIHEI, Ryo 4508-18, Kamiyoshida, Yamanashi 403 (JP); TERADA, Akihiro Fanuc Mansion Harimomi 8-207, Minamitsuru-gun Yamanashi 401-05 (JP)
(74) Representative: Blumbach, Kramer & Partner
(86) International application number: JP9301045
(87) International publication number: WO9403303

(57) **Abstract**

This is a laser robot system for an industrial use, wherein said laser robot system controls two laser robots (14, 16) for an industrial use by use of a robot control device (10), controls a laser oscillator (18) generating laser beams transmittable over optical fibers and a laser beam branch controlling device (20) simultaneously, and is provided with optical fiber means (36a, 36b) consisting of two systems between two light exit openings (22a, 22b) of said laser beam branch controlling device (20) and respective condensing devices (42, 42) of said two laser robots (14, 16); so that said two laser robots for the industrial use can be simultaneously controlled independently of or in synchronism with each other.

## Description

### TECHNICAL FIELD

The. present invention relates to an industrial laser robot system provided with two industrial laser robots which are controlled individually, or simultaneously and synchronously by a single robot control unit and, more particularly, to an industrial laser robot system provided with two industrial laser robots, and a single robot control unit for controlling the two industrial laser robots, in which a laser beam having a wavelength in a wavelength range covering wavelengths capable of being transmitted by optical fibers is transmitted through an optical fiber cable to a light condensing unit attached to the extremity of each industrial laser robot, and the industrial laser robots are controlled for desired laser beam machining operations according to predetermined programs by the single robot control unit.

### PRIOR ART

Industrial laser robots have been widely used in the laser beam machining field for cutting blanks, such as metal plates, welding workpieces, and for the cutting and welding of parts in assembly lines. (Refer to International Application No. PCT/JP92/00093 filed by the applicant of the present patent application.)
Generally, these conventional industrial laser robots employ a CO₂ gas laser beam having high energy. Recently, a YAG laser (yttrium-aluminum-garnet laser) capable of providing a laser beam having a wavelength far shorter than that of the CO₂ laser beam, capable of being transmitted through optical fibers and having a power level sufficiently high for laser beam machining has been proposed and applied to laser beam machining.

A well-known YAG laser apparatus is provided with a controller by which a YAG laser beam is divided into a plurality of YAG laser beams, and the plurality of YAG laser beams are distributed to a plurality of machining stations. However, the plurality of machining stations perform machining operations individually and separately by using the YAG laser beams transmitted thereto and do not operate in relation with each other. There has not been proposed any machining system having a plurality of machining stations which are systematically controlled so as to operate in connection with each other for cooperative machining to thereby carry out a desired machining process. Incidentally, a laser robot system including a plurality of laser robots, in which a YAG laser beam emitted by a YAG laser source is divided into a plurality of YAG laser beams and the plurality of YAG laser beams are respectively distributed to the plurality of laser robots, has been proposed.

However, the plurality of laser robots of this previously proposed laser robot system are connected to and controlled by respective robot control units and each laser robot merely receives the divided YAG laser beam from a YAG laser unit.

Accordingly, a large floor space is necessary for installing the plurality of controllers for controlling the plurality of laser robots. The previously proposed laser robot system has functional problem such that the YAG laser unit is provided with a laser beam controller merely capable of the on-off control of laser beam emitting operation according to the operation of the plurality of laser robots and it is difficult to control the energy level of the YAG laser beams precisely by the laser beam controller according to the various laser machining conditions for the laser robots. Therefore, the previously proposed laser robot system can stand further improvement before being applied to, for example, an automobile assembly line.

### DISCLOSURE OF THE INVENTION

Accordingly, it is an object of the present invention to provide an industrial laser robot system capable of systematically functioning and of solving the problems in the foregoing known industrial laser robot system.

Another object of the present invention is to provide an industrial laser robot system comprising two industrial laser robots, a single robot control unit capable of controlling the two industrial robots, and a laser beam emitting and transmitting system capable of guiding a laser beam transmitted through an optical fiber cable to the light condensing unit of each industrial laser robot and of controlling the energy level of each laser beam according to laser beam machining conditions for each industrial laser robot.

In accordance with the present invention, an industrial laser robot system is provided, which comprises: a single robot control means; two industrial laser robots individually and electrically connected to the robot control means by an electrical connecting means; a single laser means that emits a laser beam capable of being transmitted through optical fibers according to command given thereto by the robot controller, connected to the robot control means by an electrical connecting means; a single laser beam splitting control means having one laser beam inlet through which to receive the laser beam emitted by the laser means and two laser beam outlets, and capable of adjusting the energy level of the laser beam received through the laser beam inlet and of simultaneously providing laser beams at the two laser beam outlets or selectively providing a laser beam at either of the two laser beam outlets; and two optical fiber beam transmitting means interconnecting the two laser beam outlets of the laser beam splitting control means and the respective light condensing units of the two industrial laser robots. The two industrial laser robots can be controlled for individual operation or for simultaneous, synchronous operation.

The single robot control means controls the two industrial laser robots according to a program given thereto by teaching to make the two industrial laser robots perform robot actions individually or cooperatively to carry out laser beam machining, controls the laser beam emitting operation of the laser unit that emits a laser beam capable of being transmitted through optical fibers, such as a YAG laser beam, and controls the operation of the laser beam splitting control unit for the selective transmission of the laser beams and the adjustment of the energy level of the laser beam to control the two industrial laser robots for individual or synchronous operation. Preferably, the industrial laser robots are industrial articulated laser robots.

### BRIEF DESCRIPTION OF THE DRAWINGS

The above and other objects, features and advantages of the present invention will be made more apparent from the description of a preferred embodiment thereof with reference to the accompanying drawings, wherein:
Fig. 1 is a perspective view of an industrial laser robot system in a preferred embodiment according to the present invention;
Figs. 2 is a typical view of a laser beam splitting control unit;
Fig. 3 is a typical perspective view of a beam splitting device for splitting a laser beam and adjusting the energy level of the laser beam, included in the laser beam splitting control unit;
Fig. 4 is a plan view of assistance in explaining a mode of practical application of the industrial laser robot system of the present invention;
Fig. 5 is a plan view of assistance in explaining another mode of practical application of the industrial laser robot system of the present invention; and
Fig. 6 is a plan view of assistance in explaining a third mode of practical application of the industrial laser robot system of the present invention.

### BEST MODE OF CARRYING OUT THE INVENTION

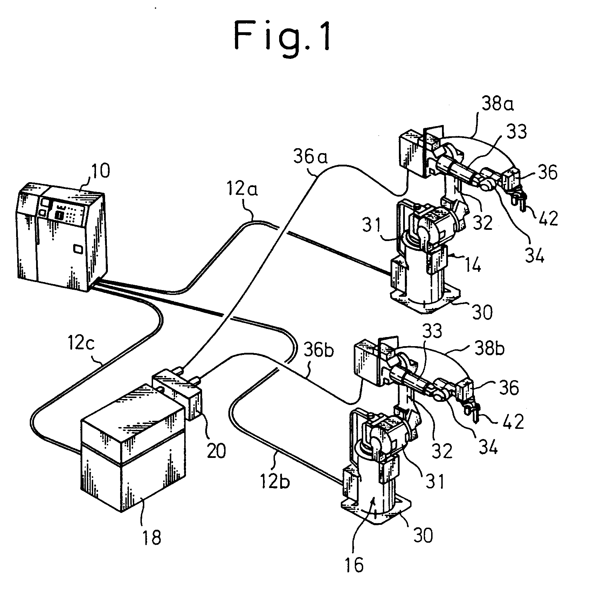

Referring to Fig. 1, an industrial laser robot system in accordance with the present invention comprises a single robot controller 10, two articulated laser robots 14 and 16 connected to the robot controller 10 by connection cables 12a and 12b each having signal lines and power lines, a single laser unit 18 capable of emitting a YAG laser beam and connected to the robot controller 10 by a connection cable 12c, a laser beam splitting controller 20 for adjusting the energy level of the YAG laser beam emitted by the laser unit 18 and splitting the YAG laser beam into two YAG laser beams to provide the two YAG laser beams respectively at two laser beam outlets 22a and 22b, optical fiber cables 36a and 36b for transmitting the two YAG laser beams provided at the two laser beam outlets 22a and 22b of the laser beam splitting controller 20 respectively to the two laser robots. 14 and 16, and optical fiber cables 38a and 38b for transmitting the YAG laser beams to laser beam condensing devices 42 held on the extremities of the laser robots 14 and 16, respectively. The robot controller 10 controls the operations of the two articulated laser robots 14 and 16 through the connection cables 12a and 12b according to a program given thereto beforehand by teaching and other given programs and, at the same time, controls the laser beam emitting operation of the laser unit 18, and controls the beam splitting action and the laser energy adjusting action of the laser beam splitting controller 20 through the laser unit 18.

The articulated laser robots 14 and 16 shown in Fig. 1 are the same in construction as conventional general-purpose articulated laser robots. Each of the articulated laser robots 14 and 16 is a six-axis robot unit comprising a base 30, a robot body 31, a robot upper arm 32, a robot forearm 33, a robot wrist 34 and such, and capable of moving the extremity of the robot wrist 34 to positions in a three-dimensional space. Each of the articulated laser robots 14 and 16 shown in Fig. 1 is provided, on the extremity of the robot wrist 34, with an additional axis means 36 for laser beam boring internally provided with the laser beam condensing device 42 and capable of turning about its center axis.

The YAG laser beam emitted by the laser unit 18 has a comparatively short wavelength, in the order of about 1.06 micrometer in the near infrared range, and the laser unit 18 is a solid state laser. Accordingly, the YAG laser beam can be transmitted by optical fibers. The YAG laser beam is a well-known laser beam which has been used in the laser beam machining field and the laser unit 18 is a well-known laser unit and hence further description thereof will be omitted.

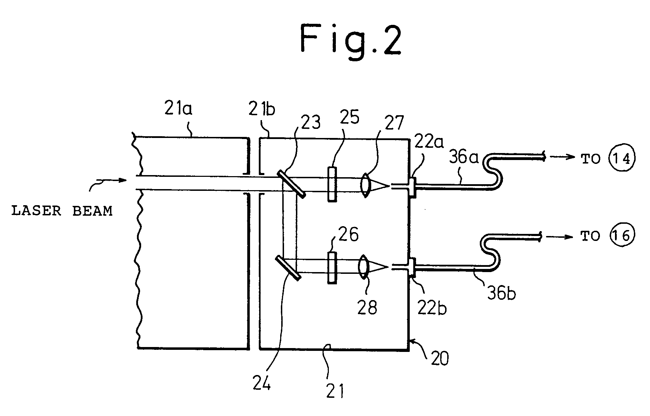

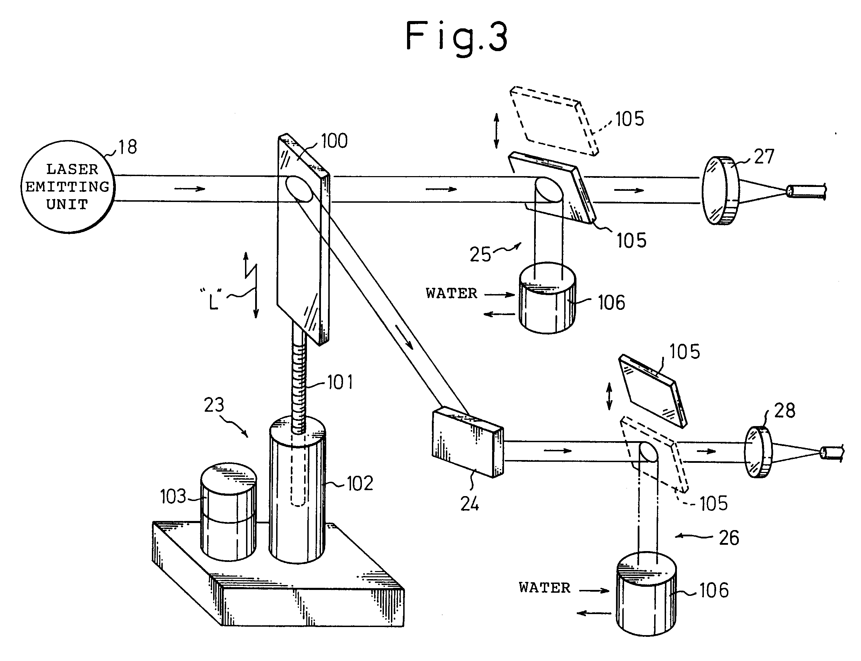

Referring now to Figs. 2 and 3 illustrating the configuration of the laser beam splitting controller 20, a laser beam splitting system, which will be described later, contained in a sealed box 21 (Fig. 2) receives the YAG laser beam emitted by the laser unit 18, splits the YAG laser beam into two YAG laser beams so that the two YAG laser beams travel through the two laser beam outlets 22a and 22b into the optical fiber cables 36a and 36b, respectively.

The laser beam splitting system comprises a first mirror device 23, a second mirror device 24, a first shutter device 25 disposed behind the first mirror device 23 with respect to the direction of travel of the YAG laser beam, a second shutter device 26 disposed behind the second mirror device 24, a condenser lens 27 disposed behind the first shutter device 25, and a condenser lens 28 disposed behind the second shutter device 26.

The YAG laser beam received from the laser unit 18 is transmitted, reflected or subjected to dimming by the first mirror device 23. The YAG laser beam transmitted by the first mirror device 23 travels, when the first shutter device 25 is open, through the first shutter device 25, the condenser lens 27 and the laser beam outlet 22a into the optical fiber 36a. When the first shutter device 25 is closed, the YAG laser beam is absorbed by the beam absorber of the first shutter device 25.

On the other hand, the YAG laser beam reflected by the first mirror device 23 toward the second mirror device 24 is deflected toward the second shutter device 26. When the second shutter device 26 is open, the YAG laser beam travels through the condenser lens 28 and the laser beam outlet 22b and is transmitted by the optical fiber cable 36b to the laser robot 16. When the second shutter device 26 is closed, the YAG laser beam, similarly to the YAG laser beam falling on the first shutter device 25, is absorbed by the beam absorber of the second shutter device 26.

As is obvious from the foregoing description, the laser beam splitting system is capable of splitting the YAG laser beam emitted by the laser unit 18 into the two YAG laser beams and also capable of making the YAG laser beam received from the laser unit 18 travel through the first shutter device 25 toward the laser beam outlet 22a without reflecting the received YAG laser beam at all when so required by the robot controller 10.

When transmitting part of the received YAG laser beam and reflecting part of the same, the first mirror device 23 is capable of adjusting the respective energy levels of the YAG laser beams distributed to the laser beam passages by adjusting the power ratio between the transmitted YAG laser beam and the reflected YAG laser beam. The respective constructions of the first mirror device 23, the first shutter device 25 and the second shutter device 26 will be described in detail with reference to Fig. 3.

Referring to Fig. 3, The first mirror device 23 has a mirror 100 supported on a ball screw 101 screwed in a recirculating ball type nut member 102. The nut member 102 is turned to move the ball screw 101 vertically together with the mirror 100. The mirror 100 has varying transparency increasing toward the upper end and varying reflectivity increasing toward the lower end of the same. Therefore, when the YAG laser beam coming from the laser unit 18 falls in an upper region near the upper end of the mirror 100 as shown in Fig. 3, a large part of the YAG laser beam travels through the mirror 100 toward the first shutter device 25, and a small part of the same is reflected by the mirror 100 and travels toward the second mirror device 24 having a fixed mirror.

When the mirror 100 is raised by extending the ball screw 101 upward so that the received YAG laser beam falls in the lower region near the lower end of the mirror 100, the transmission ratio is reduced, the amount of the transmitted YAG laser beam decreases and the amount of the reflected YAG laser beam increases. Consequently, the amount of the YAG laser beam traveling toward the first shutter device 25 decreases and the amount of the YAG laser beam traveling via the second mirror device 24 toward the second shutter device 26 increases.

A motor 103, which is a generally known servomotor, is used for linearly moving the ball screw 101 together with the mirror 100. The motor 103 is controlled by the robot controller 10 (Fig. 1).

Referring again to Fig. 3 showing the configurations of the first shutter device 25 and the second shutter device 26, the shutter devices 25 and 26 are combined in a shutter unit. Each of the shutters 25 and 26 has a reflecting mirror 105 and a laser beam absorber 106. When the reflecting mirror 105 is placed at a closed position (the position of the reflecting mirror 105 of the first shutter device 25 indicated by continuous lines and the position of the reflecting mirror 105 of the second shutter device 26 indicated by dotted lines) on the path of the YAG laser beam, the reflecting mirror 105 reflects the YAG laser beam toward the laser beam absorber 106 cooled with water or such and the laser beam absorber 106 absorbs the YAG laser beam. When the reflecting mirror 105 is retracted from the path of the YAG laser beam to an open position (the position of the reflecting mirror 105 of the first shutter device 25 indicated by dotted lines or the position of the reflecting mirror 105 of the second shutter device 26 indicated by continuous lines), the YAG laser beam is allowed to travel toward the condenser lens 27 or 28 disposed behind the reflecting mirror 105.

Each of the reflecting mirrors 105 of the first shutter device 25 and the second shutter device 26 is shifted between the open position and the closed position by a mechanical operating mechanism, not shown, which is controlled by the robot controller 10 (Fig. 1). Preferably, the laser unit 18 and the laser beam splitting controller 20 are combined in a unit as shown in Fig. 1, in which the sealed box 21 may be divided into a box 21a for containing the laser unit 18 and a box 21b for containing the laser beam splitting controller 20, and the boxes 21a and 21b may be connected by an appropriate light-proof sealing means.

Referring again to Fig. 1, as is obvious from the foregoing description, the laser robot system embodying the present invention has the two laser robots 14 and 16 which are controlled for individual operation or for simultaneous and synchronous operation by the single robot controller 10.

The YAG laser beam emitted by the single laser unit 18 is split into two YAG laser beams by the laser beam splitting controller 20, and the two YAG laser beams are transmitted through the two optical fiber cables 36a and 36b to the two laser robots 14 and 16, respectively, and the laser beam emitting operation of the laser unit 18 and the laser beam splitting operation and the energy level adjusting operation of the laser beam splitting controller 20 are controlled by the single robot controller 10. Accordingly, the laser robot system is capable of installed in a very narrow area and of very efficiently carrying out laser beam machining.

For example, when either of the two laser robots 14 and 16 is in an idle state for workpiece changing or the like, the YAG laser beam emitted by the laser unit 18 is used for laser beam machining by the other laser robot, so that the laser unit 18 is prevented from being idle and can be used at an improved utilization ratio. Since the single robot controller 10 is capable of controlling the two laser robots 14 and 16 according to the given laser beam machining programs for individual operation or for simultaneous, synchronous operation, the laser beam machining operation for machining workpieces can be carried out at an optimum efficiency. Since the robot controller 10 also controls the laser unit 18 and the laser beam splitting controller 20, the combination of the control of YAG laser beam supply and the energy level adjustment of the YAG laser beams enables the effective use of the YAG laser beams and efficient laser beam machining.

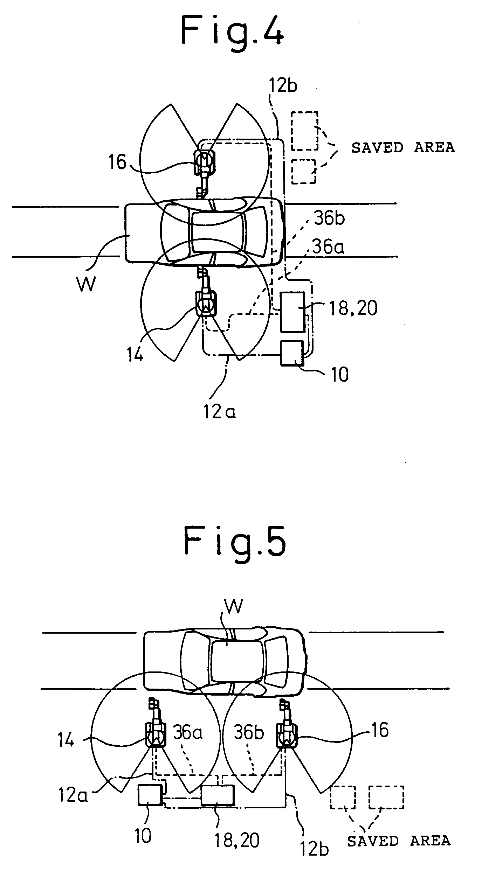

Figs. 4 to 6 show, by way of example, modes of practical application of industrial laser robot systems in accordance with the present invention. In the industrial laser robot system shown in Fig. 4, the two laser robots 14 and 16 are installed at one of the laser beam machining stations of an automobile assembly line opposite to each other and on opposite sides of an automobile W, the robot controller 10 and an integral assembly of the laser unit 18 and the laser beam splitting controller 20 are installed near the laser robot 14 on a line substantially perpendicular to the automobile assembly line, and the laser beam machining operations of the laser robots 14 and 16, the laser beam emitting operation of the laser unit 18 and the laser beam splitting operation of the laser beam splitting controller 20 are controlled to process the workpiece, i.e., the automobile W, for laser beam machining at a high processing efficiency. Since the vacant space beside the laser robot 16 can be used for other purposes, the industrial laser robot system saves the floor space.

In the industrial laser robot system shown in Fig. 5, the two industrial laser robots 14 and 16 are installed side by side at one of the laser beam machining stations of an automobile assembly line on one side of the automobile assembly line, the robot controller 10 is disposed behind the industrial laser robot 14, and an integral assembly of the laser unit 18 and the laser beam splitting controller 20 is disposed in an area extending behind the industrial laser robots 14 and 16. The laser robots 14 and 16 process a workpiece, i.e., an automobile W, for laser beam machining, such as laser beam welding and/or laser beam cutting. Since the industrial laser robot system has the single robot controller 10 and the single laser unit 18, the space beside the laser robot 16, enclosed by dotted lines in Fig. 5, can be saved for other purposes.

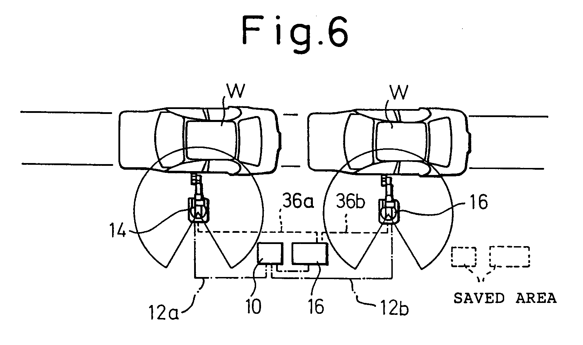

In the industrial laser robot system shown in Fig. 6, the two laser robots 14 and 16 are installed respectively at two laser beam machining stations of an automobile assembly line to process two workpieces, i.e., two automobiles W. The robot controller 10 and the laser unit 18 are disposed in a space between the laser robots 14 and 16. Therefore, spaces on one side of the laser robot 16, enclosed by dotted lines in Fig. 6 can be saved.

As is apparent form the foregoing description, an industrial laser robot system in accordance with the present invention comprises a single robot controller, two industrial laser robots individually connected to the robot controller by a connecting means, a single laser unit connected to the robot controller by a connecting means and capable of emitting a laser beam capable of being transmitted by optical fibers according to commands provided by the robot controller, a single laser beam splitting controller internally provided with a beam splitting system capable of adjusting the energy level of the laser beam emitted by the laser unit and of simultaneously directing two laser beams to two laser beam outlets or selectively directing a laser beam to one of the two laser beam outlets and of being controlled by the robot controller, and two optical fiber transmission means interconnecting the two laser beam outlets of the laser beam splitting controller and the respective laser beam condensing devices of the two industrial laser robots, and the two industrial laser robots can be controlled for individual operation or for simultaneous, synchronous operation. Accordingly, one of the two industrial laser robots can be operated to carry out laser beam machining by using the YAG laser beam emitted by the laser unit while the other industrial laser robot is in an idle state, so that the YAG laser beam can be effectively used and laser beam machining can be efficiently carried out by the two industrial laser robots.

Furthermore, the two industrial laser robots can be efficiently operated in combination with the single robot controller, the single laser unit and the single laser beam splitting controller, and the floor space necessary for installing the industrial laser robot system can be reduced to the least necessary amount.

Still further, the laser beam splitting system splits the YAG laser beam and adjusts the energy level of the YAG laser beam for effective use of the YAG laser beam and minute control of the power of the YAG laser beam.

### LIST OF REFERENCE CHARACTERS

- 10: Robot controller
- 12a: Connection cable
- 12b: Connection cable
- 12c: Connection cable
- 14: Laser robot
- 16: Laser robot
- 18: Laser unit
- 20: Laser beam splitting controller
- 22a: Laser beam outlet
- 22b: Laser beam outlet
- 23: First mirror device
- 24: Second mirror device
- 25: First shutter device
- 26: Second shutter device
- 27: Condenser lens
- 28: Condenser lens
- 36a: Optical fiber cable
- 36b: Optical fiber cable
- 38a: Optical fiber cable
- 38b: Optical fiber cable
- 42: Laser beam condensing device
- 100: Mirror
- 101: Ball screw
- 102: Recirculating ball type nut member
- 103: Servomotor
- 105: Reflecting mirror
- 106: Laser beam absorber
- W: Automobile (Workpiece)

## Claims

1. An industrial laser robot system comprising:
a single robot control means;
two industrial laser robots individually and electrically connected to said robot control means;
a single laser means that emits a laser beam capable of being transmitted through optical fibers according to commands given thereto by said robot control means, connected to said robot control means by an electrical connecting means;
a single laser beam splitting control means having one laser beam inlet through which to receive the laser beam emitted by said laser means and two laser beam outlets, and capable of adjusting the energy level of the laser beam received through said laser beam inlet and of simultaneously providing laser beams at said two laser beam outlets or selectively providing a laser beam at either of the two laser beam outlets; and,
two beam transmitting means of an optical fiber system interconnecting said two laser beam outlets of said laser beam splitting control means and said respective laser beam condensing devices of said two industrial laser robots, respectively, whereby said two industrial laser robots can be controlled for individual operation or for simultaneous, synchronous operation.

2. An industrial laser robot system according to claim 1, wherein said laser beam splitting control means comprises:
an optically sealed housing having one wall provided with said laser beam inlet, and another wall provided with said two laser beam outlets;
a beam splitting means disposed between said laser beam inlet and said two laser beam outlets within said housing; and,
a first mirror means provided with a means operatively connected to said robot control means for controlling an adjustment of beam splitting action of said beam splitting means.

3. An industrial laser robot system according to claim 2, wherein said beam splitting means comprises:
a first mirror means including a movable mirror having varying optical transparency varying along a predetermined direction and disposed in optical connection with said laser beam inlet and one of said two laser beam outlets; and
a second mirror means including a fixed mirror disposed in optical connection with said first mirror means and the other laser beam outlet; and
said control means for controlling the adjustment of the beam splitting action of said beam splitting means comprises:
a mirror moving means capable of moving the movable mirror along a predetermined direction for positional adjustment to adjust the ratio between the laser beam traveling through said movable mirror of said first mirror means toward one of said two laser beam outlets and said laser beam reflected by said movable mirror and traveling toward a fixed mirror of said second mirror means.

4. An industrial laser robot system according to claim 3, wherein said mirror moving means comprises:
a ball screw connected to said movable mirror;
a recirculating ball type nut element in screw-engagement with the ball screw; and
a servomotor means for driving the recirculating ball type nut element for rotation, connected to said robot control means.

5. An industrial laser robot system according to claim 3, wherein said beam splitting means further comprises:
a first shutter means disposed between said first mirror means and one of said laser beam outlets; and
a second shutter means disposed between said second mirror means and said other laser beam outlet.

6. An industrial laser robot system according to claim 5, wherein each of the first and second shutter means is provided with a cooling means which functions when the associated shutter means intercept the laser beam.

7. An industrial laser robot system according to claim 1, wherein the two industrial laser robots are industrial articulated laser robots.

8. An industrial laser robot system according to claim 7, wherein the two industrial articulated laser robots are disposed respectively at different working positions to process a workpiece for laser beam machining.

9. An industrial laser robot system according to claim 7, wherein the two industrial articulated laser robots are disposed respectively at different working positions to process two different workpieces, respectively, for laser beam machining.
